# EUROPÄISCHE PATENTSCHRIFT

(11) **EP 3 139 139 B1**
(45) Veröffentlichungstag und Bekanntmachung des Hinweises auf die Patenterteilung: **10.11.2021**
(21) Anmeldenummer: 15183359.7
(22) Anmeldetag: 01.09.2015
(51) Int. Cl.: G01F 25/00, G01S 13/00, G01F 23/284, G01S 7/02, G01S 7/292, G01S 7/35, G01S 13/88, G01F 22/00

(54) **FÜLLSTANDMESSGERÄT MIT STÖRSIGNAL-ERFASSUNGSMODUS**
FILL LEVEL MEASURING DEVICE WITH DETECTION MODE FOR INTERFERING SIGNALS
APPAREIL DE MESURE DE NIVEAU DE REMPLISSAGE AVEC MODE DE DÉTECTION DE SIGNAUX PARASITES

(43) Veröffentlichungstag der Anmeldung: 08.03.2017
(73) Patentinhaber: VEGA Grieshaber KG, 77709 Wolfach (DE)
(72) Erfinder: FISCHER, Michael, 72275 Alpirsbach (DE)
(74) Vertreter: Maiwald Patent- und Rechtsanwaltsgesellschaft mbH

(56) Entgegenhaltungen:
- EP-A1- 2 161 551
- DE-A1- 19 949 992
- DE-A1-102005 057 094

## Beschreibung

### Gebiet der Erfindung

Die Erfindung betrifft die Füllstandmessung. Insbesondere betrifft die Erfindung ein Füllstandmessgerät mit einem Störsignalerfassungsmodus, ein Verfahren zum Vermeiden einer Störbeeinflussung eines Füllstandradars, ein Programmelement und ein computerlesbares Medium.

### Hintergrund

Füllstandmessgeräte, und insbesondere Füllstandradargeräte, senden ein Sendesignal in Richtung der Füllgutoberfläche aus, was von dieser reflektiert wird. Das an der Füllgutoberfläche reflektierte Sendesignal, das im Folgenden als Empfangssignal bezeichnet wird, kann dann vom Füllstandmessgerät ausgewertet werden. Im Rahmen dieser Auswertung lässt sich aus dem im Empfangssignal enthaltenen Füllstandecho, bei dem es sich um den Signalanteil des Sendesignals handelt, der an der Füllgutoberfläche reflektiert wurde, der Füllstand bestimmen.

Je nach Intensität des ausgesendeten Sendesignals, der Beschaffenheit der Füllgutoberfläche und weiterer Rahmenbedingungen, wie beispielsweise die Existenz von Störsignalen, kann die Messgenauigkeit negativ beeinflusst werden.

Diesen, die Messgenauigkeit herabsetzenden Einflüssen kann durch eine geschickte Auslegung der Empfangsantenne, der mit der Signalerzeugung und der Signalverarbeitung zusammenhängenden Elektronik sowie der Vorsehung von Abschirmungen, welche verhindern, dass Störsignale zur Empfangsantenne gelangen, begegnet werden.

Diese Maßnahmen sind teilweise aufwändig und führen nicht in allen Fällen zum gewünschten Erfolg.

DE 10 2005 057 094 A1 und EP 2 161 551 A2 beschreiben Füllstandmessgeräte mit variabler Sendeleistung, um übermäßig hohe Sendeleistungen zu vermeiden.

DE 199 49 992 A1 beschreibt ein TDR-Gerät sowie ein Verfahren zur Erhöhung der Störfestigkeit eines Zeitbereichsreflektometers gegenüber Hochfrequenzeinstrahlung, bei welchem mit einer Pulsrepetierfrequenz ein Sendepuls erzeugt und in eine Wellenleitung eingekoppelt wird.

### Zusammenfassung der Erfindung

Es ist eine Aufgabe der Erfindung, die Messgenauigkeit und die Messsicherheit von Füllstandmessgeräten zu erhöhen.

Diese Aufgabe wird durch den Gegenstand der unabhängigen Patentansprüche gelöst. Weiterbildungen der Erfindung ergeben sich aus den Unteransprüchen und der folgenden Beschreibung.

Die Erfindung betrifft ein Füllstandmessgerät, insbesondere ein Füllstandradarmessgerät, welches einen Sendezweig und einen Empfangszweig aufweist. Der Sendezweig dient dem Erzeugen und dem Aussenden eines Sendesignals in Richtung der Füllgutoberfläche. Für das Aussenden des Sendesignals kann der Sendezweig eine Antenne aufweisen, welche das Sendesignal in Richtung Füllgutoberfläche abstrahlt. Der Empfangszweig dient dem Empfangen und der darauffolgenden Auswertung des reflektierten Sendesignals (Empfangssignal).

Das Füllstandmessgerät ist zum wahlweisen Einnehmen eines Störsignalerfassungsmodus und eines Füllstandmessmodus ausgeführt. Im Störsignalerfassungsmodus kann das Füllstandmessgerät detektieren, ob das Empfangssignal ein Störsignal aufweist. Eine Füllstandmessung erfolgt in diesem Modus nicht. Im Füllstandmessmodus kann das Messgerät den Füllstand messen. Hierbei weist das im Störsignalerfassungsmodus ausgesendete Sendesignal eine geringere Intensität auf, als das im Füllstandmessmodus ausgesendete Sendesignal.

In anderen Worten wird die Intensität des Sendesignals verringert, wenn das Gerät vom Füllstandmessmodus in den Störsignalerfassungsmodus schaltet (und umgekehrt).

Beispielsweise beträgt die Intensität des Sendesignals im Störsignalerfassungsmodus null. In diesem Fall ist also das Sendesignal im Störsignalerfassungsmodus abgeschaltet, beispielsweise durch eine Unterbrechung des Sendezweigs.

Wird nun im Störsignalerfassungsmodus ein Störsignal detektiert, so kann dieses bei der Berechnung des Füllstands berücksichtigt werden. Da das Füllstandmessgerät, wenn es im Störsignalerfassungsmodus ein Störsignal detektiert hat, im Füllstandmessmodus den Sende- und Empfangskanal des Sende- bzw. Empfangssignals wechselt, kann vermieden werden, dass das Störsignal Einfluss auf die Füllstandmessung ausübt.

Beispielsweise ist ein variables Filter vorgesehen, das im Empfangszweig des Füllstandmessgeräts angeordnet ist und auf den aktuell verwendeten Sende- und Empfangskanal abgestimmt ist.

Auch kann ein variables Dämpfungsglied vorgesehen sein, das im Sendezweig angeordnet ist und zum Einnehmen des Störsignalerfassungsmodus die Dämpfung des Sendesignals erhöht.

Ebenso ist es möglich, einen Verstärker im Sendezweig anzuordnen, der zum Einnehmen des Störsignalerfassungsmodus deaktiviert wird, sodass die Intensität des Sendesignals deutlich zurückgeht oder sogar null erreicht.

Im letzteren Fall werden im Störsignalerfassungsmodus nur noch Störsignale von externen Störquellen detektiert. Bei diesen externen Störquellen handelt es sich um Geräte, die im selben Frequenzband senden, beispielsweise um andere Füllstandmessgeräte.

Durch den Wechsel des Sende- und Empfangskanals können diese Störeinflüsse reduziert oder sogar gänzlich eliminiert werden. Hierdurch wird die Qualität der Füllstandmessung erhöht.

Gemäß einer weiteren Ausführungsform der Erfindung ist das Füllstandmessgerät zum zyklischen Schalten zwischen dem Störsignalerfassungsmodus und dem Füllstandmessmodus ausgeführt. Es prüft somit regelmäßig nach, ob das Empfangssignal Störsignale aufweist. Ist dies der Fall, kann vorgesehen sein, dass der Sende- und Empfangskanal automatisch gewechselt wird.

Gemäß einer weiteren Ausführungsform der Erfindung weist das Füllstandmessgerät einen Schalter auf, der den Sendezweig zum Einnehmen des Störsignalerfassungsmodus unterbricht. Dies ist ein effektives Mittel, um vom Füllstandmessmodus in den Störsignalerfassungsmodus zu schalten, da lediglich der Schalter umgelegt werden muss und keine weiteren Änderungen in der Elektronik vorgenommen werden müssen.

Es ist auch möglich, dass eine Kombination der oben beschriebenen Maßnahmen vorgesehen ist, beispielsweise das gleichzeitige Vorsehen eines variablen Filters und eines variablen Dämpfungsglieds, oder eines variablen Filters und eines Verstärkers. Gemäß einer weiteren Ausführungsform der Erfindung weist das Füllstandmessgerät einen Datenspeicher auf, auf dem eine Referenzechokurve gespeichert ist, welche keinen Störsignalanteil aufweist. Das Füllstandmessgerät ist zum Vergleich des im Störsignalerfassungsmodus erfassten Empfangssignals mit der Referenzechokurve ausgeführt, um zu entscheiden, ob das Empfangssignal ein Störsignal aufweist oder nicht.

Die Erfindung betrifft zudem ein Verfahren zum Vermeiden einer Störbeeinflussung eines Füllstandradars durch andere Füllstandradargeräte. Zunächst wird ein Sendesignal erzeugt und in Richtung einer Füllgutoberfläche ausgesendet. Dieses Signal wird an der Füllgutoberfläche reflektiert und das entsprechende Empfangssignal wird vom Füllstandradar empfangen und ausgewertet. Zunächst nimmt das Füllstandradar einen Störsignalerfassungsmodus ein, um zu detektieren, ob das Empfangssignal ein Störsignal aufweist. Die Intensität des Sendesignals im Störsignalerfassungsmodus ist hierbei geringer als im Füllstandmessmodus. Wird ein Störsignal detektiert, wechselt das Füllstandmessgerät den Sende- und Empfangskanal und überprüft, ob in dem neu gewählten Kanal ebenfalls Störungen vorliegen. Ist der neu gewählte Kanal frei von Störungen, schaltet das Füllstandmessgerät in den Füllstandmessmodus, um den Füllstand zu messen. Wie bereits erwähnt, ist die Intensität des Sendesignals im Füllstandmessmodus höher als im Störsignalerfassungsmodus.

Gemäß der Erfindung ist zudem ein Programmelement angegeben, das, wenn es auf dem Prozessor eines Füllstandmessgeräts ausgeführt wird, das Füllstandmessgerät anleitet, die oben und im Folgenden beschriebenen Verfahrensschritte durchzuführen.

Die Erfindung betrifft zudem ein computerlesbares Medium, auf dem das oben beschriebene Programmelement gespeichert ist.

Im Folgenden werden mit Verweis auf die Figuren Ausführungsbeispiele der Erfindung beschrieben. Werden in der folgenden Figurenbeschreibung die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

### Kurze Beschreibung der Figuren

Fig. 1 zeigt den Sende- und Empfangszweig eines Füllstandmessgeräts gemäß einem Ausführungsbeispiel der Erfindung.
Fig. 2a zeigt eine Echokurve im Füllstandmessmodus mit überlagerter Störbeeinflussung und eine Echokurve im Füllstandmessmodus ohne überlagerte Störbeeinflussung.
Fig. 2b zeigt eine Echokurve im Störsignalerfassungsmodus mit überlagerter Störbeeinflussung und eine Echokurve im Störsignalerfassungsmodus ohne überlagerte Störbeeinflussung.
Fig. 3 zeigt ein vereinfachtes Blockschaltbild des Hochfrequenzteils eines FMCW-Radarsensors gemäß einem Ausführungsbeispiel der Erfindung.
Fig. 4 zeigt ein vereinfachtes Blockschaltbild des Hochfrequenzteils eines FMCW-Radarsensors gemäß einem weiteren Ausführungsbeispiel der Erfindung.
Fig. 5 zeigt ein vereinfachtes Blockschaltbild des Hochfrequenzteils eines Pulsradars zur Füllstandmessung gemäß einem weiteren Ausführungsbeispiel der Erfindung.

### Detaillierte Beschreibung von Ausführungsbeispielen

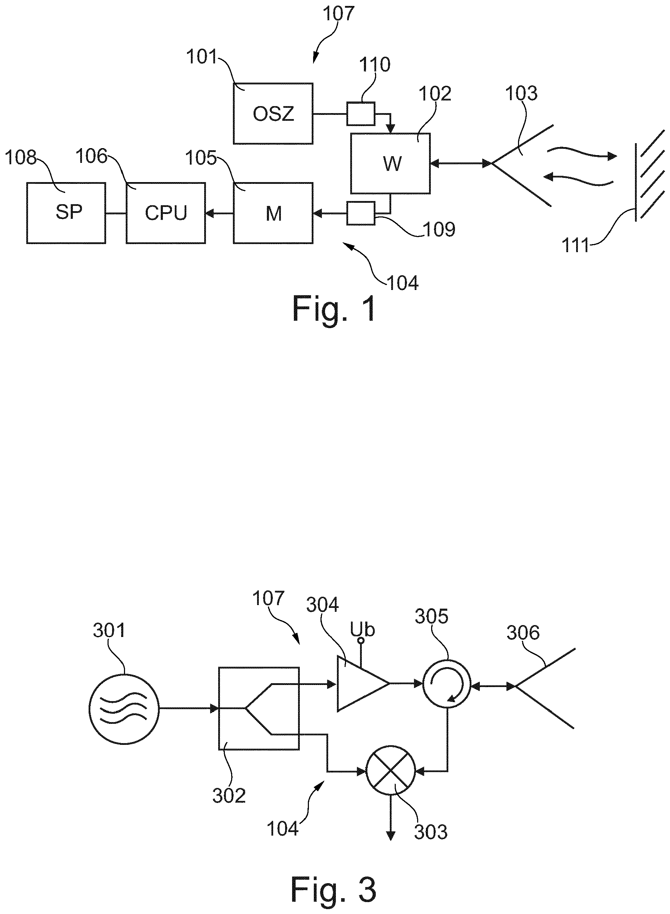

Fig. 1 zeigt ein vereinfachtes Blockschaltbild des Hochfrequenzteils eines Füllstandradars. Mit dem rapiden Anstieg der Anzahl der Funkanwendungen über die letzten Jahre, die einen Teil des Frequenzspektrums für ihre Zwecke nutzen, sei es zur Kommunikation oder auch zu anderen Zwecken, wie beispielsweise zur Abstandmessung, stieg auch das Potenzial der gegenseitigen Beeinflussung der Geräte. Da es keine beliebig hohe Anzahl an nutzbaren Frequenzbändern gibt, muss sich eine ansteigende Anzahl an Geräten das zur Verfügung stehende Frequenzspektrum teilen.

So ist beispielsweise ein Frequenzbereich von 76 bis 77 GHz für Anwendungen im Kfz-Bereich zugeteilt. Dieser Frequenzbereich wird zum Beispiel von Kfz-Radarsensoren zur Abstandswarnung oder im Rahmen eines adaptiven Geschwindigkeitsregelungssystems (ACC, Adaptive Cruise Control) benutzt. Dieser Frequenzbereich überlappt mit dem zur Füllstandmessung im Freien freigegebenen Frequenzbereich von 75 bis 85 GHz. Eine Koexistenz beider Systeme ohne gegenseitige Beeinflussung im selben Frequenzband wäre sehr wünschenswert.

Weiterhin ist es wünschenswert, mehrere Radarsensoren zur Füllstandmessung auf engem Raum einsetzen zu können, die im selben Frequenzband senden, ohne dass eine Beeinflussung durch die Radarsignale der benachbarten Geräte stattfindet. Insbesondere in einem Szenario mit mehreren Radarsensoren im gleichen Behälter muss damit gerechnet werden, dass sich die Geräte gegenseitig stören.

Wie die Beeinflussung eines Radarsensors zur Füllstandmessung durch Signale von anderen Sendern, die das gleiche Frequenzband nutzen, erkannt werden kann und wie geeignete Maßnahmen getroffen werden können, um erstens eine Koexistenz der Systeme zu ermöglichen und zweitens einen möglichst störungsfreien Betrieb des Füllstandsensors zu gewährleisten, wird im Folgenden beschrieben.

Um den Radarsensor zur Füllstandmessung robuster gegen Störungen von anderen Geräten zu machen, die im selben Frequenzband senden, werden Verfahren und Schaltungsanordnungen vorgeschlagen, deren Grundlage das Blockschaltbild der Fig. 1 darstellt.

Ein Sendeoszillator 101 erzeugt ein Sendesignal, welches über eine Sende-/Empfangsweiche 102 zur Antenne 103 gelangt und in Richtung eines Füllgutes abgestrahlt wird. Der oben beschriebene Teil des Füllstandmessgeräts wird im Folgenden auch als Sendezweig 107 bezeichnet.

Im Sendezweig 107 kann ein variables Dämpfungsglied 110 angeordnet sein, welches zum Einnehmen des Störsignalerfassungsmodus die Dämpfung des Sendesignals erhöht, sodass die Intensität des Sendesignals im Vergleich zum Füllstandmessmodus gesenkt wird.

Das an der Füllgutoberfläche 111 reflektierte Signal gelangt wieder zurück zur Antenne 103, wird von ihr empfangen und gelangt über die Sende-/Empfangsweiche 102 in den Empfangszweig 104. Im Empfangsmischer 105 wird das empfangene Radarsignal in ein Niederfrequenzsignal heruntergemischt.

In dem Signalverarbeitungsblock 106, der sich an den Empfangsmischer 105 anschließt, erfolgt schließlich die Verstärkung, Filterung und Digitalisierung des heruntergemischten Empfangssignals und die Erzeugung und Auswertung der Echokurve. Zwischen der Weiche 102 und dem Mischer 105 kann ein variables Filter 109 angeordnet sein, welches auf den aktuell verwendeten Sende- und Empfangskanal abgestimmt ist. Das Filter 109 kann auch zwischen der Weiche 102 und der Antenne 103 angeordnet sein. Um die Selektivität zwischen den vorgesehenen Kanälen zu erhöhen, erfolgt die Filterung vorzugsweise vor dem Heruntermischen im Mischer 105.

Unerwünschte Signale von anderen Geräten können jedoch ebenfalls von der Antenne 103 empfangen und verarbeitet werden und Störungen im Empfangszweig 104 verursachen. Im Allgemeinen wirken sich unerwünschte Empfangssignale, die von anderen Nutzern stammen, auf die Echokurve des Füllstandsensors aus, die im Signalverarbeitungsblock 106 bereitgestellt und ausgewertet wird.

Der Signalverarbeitungsblock 106 kann an ein Speicherelement 108 angeschlossen sein, auf welchem beispielsweise eine Referenzechokurve gespeichert ist, auf die der Signalverarbeitungsblock zugreifen kann.

Es können im Allgemeinen zwei Szenarien unterschieden werden. Zum einen können unerwünschte Empfangssignale den in der Echokurve vorliegenden Rauschlevel anheben. Dieser Effekt ist in vielen Fällen zu beobachten. Zum anderen können in selteneren Fällen Empfangssignale von anderen Nutzern zu unerwünschten Echos in der Echokurve führen, die nichts mit dem zu messenden Füllstand zu tun haben.

Der erhöhte Rauschlevel führt zu einer Reduzierung der Empfindlichkeit des Radarsensors und die unerwünschten Echos können beispielsweise zu einer falschen Echoentscheidung und folglich zur Ausgabe eines falschen Messwertes führen. Im laufenden Betrieb können diese Anomalien in der Echokurve nicht zuverlässig erkannt werden. Eine Erhöhung des Rauschlevels kann neben den Störsignalen von anderen Nutzern im Frequenzspektrum auch andere Ursachen haben. Weiterhin kann ein erhöhter Rauschlevel in einem Szenario mit vielen Echos in der Echokurve (z. B. Störechos von Tankeinbauten oder Vielfachechos im Tank) oft nicht zuverlässig erkannt werden.

Um die Indikatoren für unerwünschte Empfangssignale von anderen Nutzern im Frequenzband zuverlässig erkennen zu können, wird der Sendezweig 107 in Fig. 1 abgeschaltet und nur der Empfangszweig 104 betrieben. Wird der Sendezweig 107 abgeschaltet, sendet der Radarsensor keine Radarsignale mehr ab. Somit ist eine Überwachung des genutzten Kanals möglich, ohne dass die resultierende Echokurve durch Füllstandechos (vom eigenen Gerät) überlagert wird. Hierbei sollten alle Mittelungen im Signalverarbeitungsblock 106 abgeschaltet werden. Insbesondere Mittelungen der Echokurve können verhindern, dass nur sporadisch oder selten auftretende Störungen sicher erkannt werden.

Werden in der so resultierenden Echokurve Auffälligkeiten entdeckt, können diese auf Empfangssignale von anderen Nutzern zurückgeführt werden. Sind die Beeinträchtigungen in der Echokurve zu groß, d. h. ist beispielsweise die Anhebung des Rauschlevels im Vergleich zur ungestörten Echokurve zu hoch, kann zunächst im Empfangszweig auf einen anderen Kanal umgeschaltet werden Das Gleiche gilt bei unerwünschten Echos in der Echokurve. Die ungestörte Echokurve wird beispielsweise bei der Produktion des Füllstandsensors im Werk gemessen und im Speicher des Sensors hinterlegt.

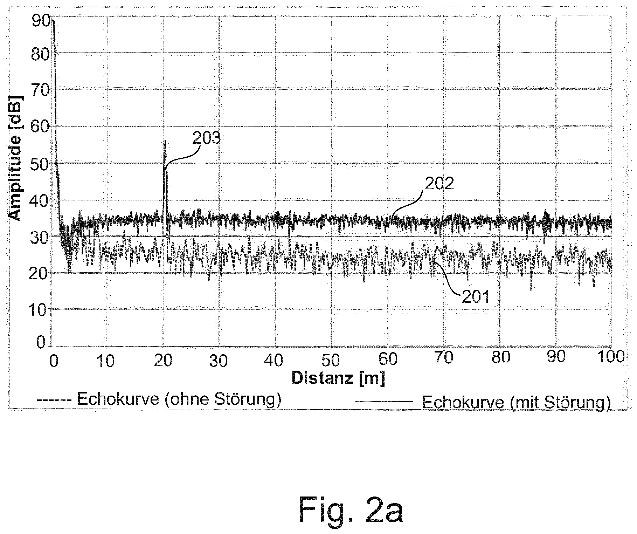

Fig. 2a zeigt anhand eines Beispiels die Auswirkungen eines Störsignals auf die Echokurve eines Radarsensors zur Füllstandmessung. Bei der Kurve 201 handelt es ich um eine ungestörte Echokurve mit einem Füllstandecho 203 in ca. 20 m Entfernung vom Messgerät. Die Echokurve 202 entsteht aus der Kurve 201, wenn der Sensor durch ein externes Störsignal im verwendeten Kanal beeinflusst wird. Man kann in diesem Fall deutlich die Anhebung des Rauschlevels der Kurve über den kompletten Messbereich um ca. 10 Dezibel erkennen. Im gleichen Maße reduziert sich auch der Signal-Rauschabstand des verbliebenen Füllstandechos 203. Eine Füllstandmessung wäre in diesem Beispiel anhand der Kurve 202 noch problemlos möglich. Unter ungünstigeren Bedingungen bei der Füllstandmessung könnte es jedoch dazu kommen, dass der durch die Störung hervorgerufene Rauschpegelanstieg das verbliebene Füllstandecho 203 maskiert. Der Sensor würde dann keinen korrekten Füllstand mehr messen können.

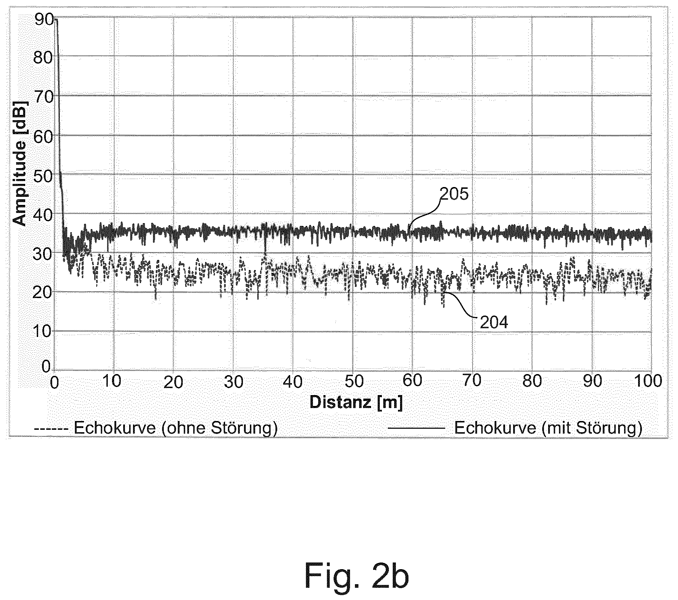

Fig. 2b zeigt eine ungestörte, im Speicher 108 des Füllstandsensors hinterlegte Echokurve 204, die mit abgeschaltetem Sendezweig aufgenommen wurde, jedoch ohne Störsignal. Die Echokurve 205 entsteht bei abgeschaltetem Sendezweig und wiederum einem von außen zugeführten Störsignal im überwachten Kanal. Der in der Kurve 205 deutlich sichtbare Rauschanstieg kann jedoch von der Signalverarbeitung anhand der hinterlegten ungestörten Kurve 204 problemlos erkannt werden.

Es kann vorgesehen sein, dass beispielsweise vor der eigentlichen Füllstandmessung zunächst das komplette zur Verfügung stehende Spektrum, also sämtliche zur Verfügung stehenden Sende-/Empfangskanäle, oder auch nur einzelne Kanäle oder Teile des Spektrums auf deren aktuelle Nutzbarkeit überprüft werden. Ist ein Kanal ohne Störungen gefunden, wird der Sendezweig 107 zugeschaltet und die eigentliche Füllstandmessung kann beginnen. Um die Selektivität zwischen den einzelnen Kanälen zu erhöhen, kann in die Verbindung zwischen Sende-/Empfangsweiche 102 und Empfangsmischer 105 oder in der Verbindung zwischen Sende-/Empfangsweiche 102 und Antenne 103 ein abstimmbares Filter 109 eingefügt werden, welches auf den jeweils verwendeten Kanal abgestimmt wird.

Die Nutzbarkeit des verwendeten Kanals kann auch während der Füllstandmessung zyklisch überprüft werden. Hierzu wird die Füllstandmessung kurz unterbrochen, indem wiederum der Sendezweig 107 abgeschaltet wird. Werden keine Auffälligkeiten in der dann resultierenden Echokurve entdeckt, wird der Sendezweig 107 wieder zugeschaltet und die Füllstandmessung fortgesetzt. Werden Beeinträchtigungen in der Echokurve entdeckt, kann beispielsweise auf einen anderen, ungestörten Sende- und Empfangskanal umgeschaltet werden.

Die von den Regulierungsbehörden für die Füllstandmessung mit Radar zugewiesenen Frequenzbereiche sind in der Regel so groß, dass sich diese in mehrere nutzbare Kanäle unterteilen lassen. Dies können sich Radargeräte zur Füllstandmessung zunutze machen, die in unmittelbarer Umgebung gleichzeitig betrieben werden, indem sie unterschiedliche Kanäle wählen, falls Störungen auftreten sollten.

Es kann vorgesehen sein, dass die benachbarten Radargeräte miteinander kommunizieren und sich die von ihnen zur Verwendung vorgesehenen Kanäle gegenseitig mitteilen, sodass bereits vor Beginn der Messung Kanäle gewählt werden können, die von benachbarten Geräten nicht verwendet werden, sodass die Störeinflüsse minimiert sind.

Hierdurch kann die Anzahl an Störsignalmessungen (jeweils gefolgt vom Umschalten auf einen anderen Kanal) reduziert werden, da ein bereits von einem benachbarten Gerät belegter Kanal vom eigenen Gerät von vornherein gar nicht erst angewählt wird.

Eine grundsätzliche Überlegung der Erfindung ist es, die Überwachung eines Frequenzspektrums mit einem Radargerät zur Füllstandmessung auf mögliche Beeinträchtigungen durch andere Nutzer des betreffenden Spektrums durchzuführen. Die Überwachung geschieht durch Abschalten des Sendezweiges oder Herunterregeln des Sendesignals im Füllstandradar (sog. Störsignalerfassungsmodus) und durch die darauffolgende Auswertung der Echokurve auf eventuelle Unregelmäßigkeiten, wie zum Beispiel den Anstieg des Rauschlevels oder das Auftauchen von Störechos.

Zur Füllstandmessung können unterschiedliche Radarverfahren eingesetzt werden. Zum einen ist ein Pulsradarverfahren bekannt, wobei sehr kurze Radarpulse abgesendet und in einem sequenziellen Samplingverfahren im Empfangsmischer wieder abgetastet werden. Zum anderen lässt sich das frequenzmodulierte Dauerstrichradar (FMCW, Frequency Modulated Continuous Wave) zur Füllstandmessung einsetzen. Die hier beschriebene Vorgehensweise zur Vermeidung von Störungen durch andere Nutzer im Spektrum ist jedoch nicht auf ein bestimmtes Radarverfahren oder eine bestimmte Modulationsart beschränkt. Vielmehr kann die hier beschriebene Vorgehensweise bei allen Radarverfahren und Modulationsarten eingesetzt werden, die für die Füllstandmessung angewendet werden.

Fig. 3 zeigt ein vereinfachtes Blockschaltbild des Hochfrequenzteils eines FMCW-Radarsensors. Der spannungsgesteuerte Oszillator (VCO, Voltage Controlled Oscillator) 301 generiert ein frequenzmoduliertes Signal (z. B. eine lineare Frequenzrampe mit der Startfrequenz f₁ und der Endfrequenz f₂), welches im Leistungsteiler 302 in ein LO (Local Oscillator, Lokaloszillator)-Signal für den Mischer 303 und ein Sendesignal aufgeteilt wird, welches über den Verstärker 304 und den Zirkulator 305 zur Antenne 306 gelangt und dort abgestrahlt wird.

Das am Füllgut reflektierte Signal gelangt wieder zur Antenne 306, wird empfangen und über den Zirkulator 305 zum Mischer 303 weitergeleitet. Mithilfe des LO-Signals wird das Empfangssignal im Mischer 303 in ein Niederfrequenzsignal heruntergemischt, sodass die weitere Verarbeitung erfolgen kann. Um den zur Füllstandmessung beabsichtigten Sende-/Empfangskanal zu überwachen, kann in der Schaltung der Fig. 3 beispielsweise der Verstärker 304 abgeschaltet werden. Dies kann zum Beispiel durch Trennen des Verstärkers von der Versorgungsspannung U_{b} erfolgen. Wird dem Verstärker 304 die Versorgungsspannung genommen, dämpft dieses Bauteil im Allgemeinen die anstehenden Eingangssignale sehr stark ab. Somit gelangen keine oder nur sehr stark abgeschwächte Sendesignale zur Antenne. Vorzugsweise werden die Signale dadurch mindestens so stark gedämpft, dass die Echos nach der Reflexion an der Füllgutoberfläche im Grundrauschen des Empfangszweiges verschwinden. Somit ist eine ungestörte Überwachung des verwendeten Kanals möglich.

Am LO-Signal für den Mischer 303 wird durch das Abschalten des Verstärkers 304 jedoch nichts verändert, sodass der durch die Frequenzen f₁ und f₂ der Frequenzrampe definierte Kanal überwacht werden kann. Wird nun bei dieser Vorgehensweise eine Störung in der Echokurve detektiert, beispielsweise durch einen erhöhten Rauschpegel, kann ein neuer Kanal gewählt werden. Dies geschieht durch neue Wahl der Start- und Endfrequenz der zur Füllstandmessung verwendeten Frequenzrampe.

Vorzugsweise sollten sich der neu gewählte Kanal und der ursprünglich gestörte Kanal nicht überlappen. Ist ein ungestörter Kanal gefunden, wird die Versorgungsspannung U_{b} des Verstärkers 304 wieder zugeschaltet und die Füllstandmessung begonnen oder fortgesetzt. Die freie Wahl der Start- und Endfrequenzen f₁ und f₂ der Frequenzrampe ist beim FMCW-Radar im Allgemeinen sehr einfach möglich, da der VCO üblicherweise in einer Phasenregelschleife geregelt wird. Die Wahl von f₁ und f₂ kann demnach auf die Programmierung des PLL (Phase Locked Loop, Phasenregelschleife)-Bausteins zurückgeführt werden und ist sowohl vor der eigentlichen Füllstandmessung als auch während des Betriebs des Radarsensors immer möglich.

Um die Selektivität zwischen den einzelnen Kanälen zu erhöhen, kann auch in die Verbindung zwischen Zirkulator 305 und Mischer 303 oder in die Verbindung zwischen Zirkulator 305 und Antenne 306 ein Filter eingefügt werden, welches auf den jeweils verwendeten Kanal abgestimmt wird.

Anstatt oder zusätzlich zum Verstärker 304 kann beispielsweise an gleicher Stelle (oder davor/dahinter) auch ein variables Dämpfungsglied verwendet werden. Bei der Überwachung des gewünschten Kanals kann dann mithilfe des Dämpfungsgliedes eine sehr hohe Dämpfung in den Sendezweig geschaltet werden, sodass keine oder nur sehr stark abgeschwächte Signale zur Antenne gelangen. Ist ein ungestörter Kanal gefunden, wird die hohe Dämpfung im Sendezweig wieder entfernt und die Füllstandmessung kann fortgesetzt werden.

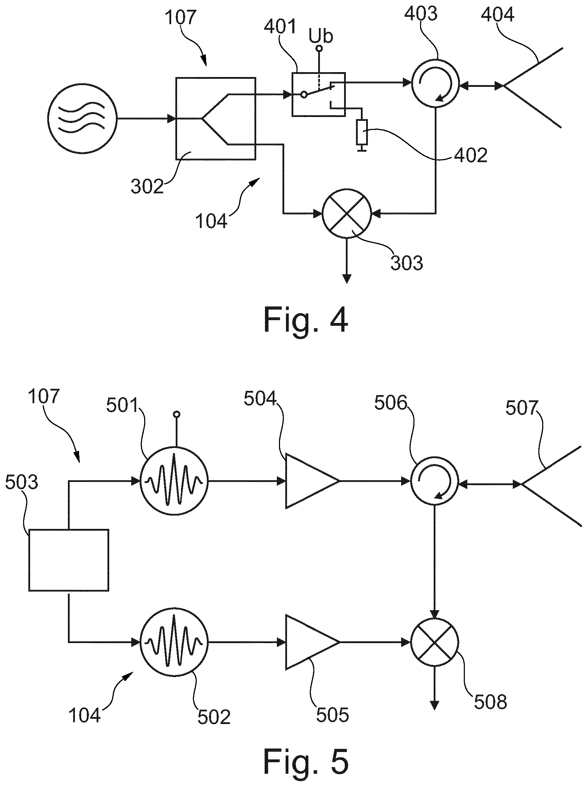

In Fig. 4 ist ein weiteres Ausführungsbeispiel für einen FMCW-Radarsensor dargestellt. Hier wird das Abschalten des Sendezweiges mithilfe eines Schalters 401 realisiert. Der Schalter 401 hat zwei Stellungen und lässt sich zum Beispiel mit der Spannung U_{b} steuern. Eine Stellung des Schalters ist so, dass das Eingangssignal des Schalters an den Zirkulator 403 und schließlich an die Antenne 404 weitergeleitet wird, wie in Fig. 4 dargestellt.

Für die Überwachung des Kanals wird der Schalter 401 umgeschaltet, sodass das Eingangssignal des Schalters an den reflexionsfreien Abschlusswiderstand 402 weitergeleitet wird. Vorzugsweise werden dadurch auch hier die Sendesignale so stark abgeschwächt, dass die Echos nach der Reflexion an der Füllgutoberfläche im Grundrauschen des Empfangszweiges verschwinden. Ist ein ungestörter Kanal gefunden, wird der Schalter wieder umgelegt, sodass die Sendesignale wieder zur Antenne gelangen können und die Füllstandmessung fortgesetzt werden kann.

Fig. 5 zeigt ein vereinfachtes Blockschaltbild des Hochfrequenzteils eines Pulsradars zur Füllstandmessung. Der Pulsoszillator 501 generiert kurze Radarpulse, die über den Verstärker 504 und den Zirkulator 506 zur Antenne 507 gelangen und dort abgestrahlt werden. Das am Füllgut reflektierte Signal gelangt zurück zur Antenne 507, wird empfangen und über den Zirkulator 506 zum Abtastmischer 508 weitergeleitet. Im Pulsoszillator 502 werden die Abtastpulse generiert, die über den Verstärker 505 zum Mischer 508 gelangen. Dort wird mithilfe der Abtastpulse das am Mischer 508 anstehende Empfangssignal durch sequenzielle Abtastung in ein Niederfrequenzsignal umgewandelt. Die Synchronisation der beiden Pulsoszillatoren 501 und 502 geschieht in der Synchronisationsschaltung 503.

Die Schaltung in Fig. 5 besitzt einen separaten Sendeoszillator 501. Durch die Abschaltung dieses Oszillators 501, zum Beispiel durch Trennen von seiner Versorgungsspannung U_{b}, ist eine sehr einfache Abschaltung des Sendesignals möglich. Somit ist wiederum eine ungestörte Überwachung des verwendeten Kanals möglich. Ein Kanalwechsel ist schließlich durch die Veränderung der Mittenfrequenz der verwendeten Radarpulse in dem zur Verfügung stehenden Frequenzband möglich. Um die Selektivität zwischen den einzelnen Kanälen zu erhöhen, kann auch hier in die Verbindung zwischen Zirkulator 506 und Samplingmischer 508 oder in die Verbindung zwischen Zirkulator 506 und Antenne 507 ein Filter eingefügt werden, welches wiederum auf den jeweils verwendeten Kanal abgestimmt werden muss.

Auch bei modernen, integrierten Radartransceivern, die auf einem einzelnen Chip als MMIC (Monolithic Microwave Integrated Circles) aufgebaut sind, kann vorgesehen sein, den oder die Sendezweige nach Bedarf abzuschalten. Somit besteht auch bei diesen Bausteinen die Möglichkeit der Kanalüberwachung nach unerwünschten Störungen.

Ergänzend sei daraufhingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät, aufweisend:
einen Sendezweig (107) zum Erzeugen und Aussenden eines Sendesignals in Richtung einer Füllgutoberfläche;
einen Empfangszweig (104) zum Empfangen und Auswerten eines Empfangssignals;
wobei das Füllstandmessgerät zum wahlweisen Einnehmen eines Störsignalerfassungsmodus, zum Detektieren, ob das Empfangssignal ein Störsignal von einer externen Störquelle aufweist, und eines Füllstandmessmodus, zum Messen des Füllstands, ausgeführt ist;
wobei das Sendesignal im Störsignalerfassungsmodus eine geringere Intensität aufweist als im Füllstandmessmodus;
wobei das Füllstandmessgerät zum Wechseln des Sende- und des Empfangskanals, wenn das Füllstandmessgerät im Störsignalerfassungsmodus ein Störsignal detektiert hat, ausgeführt ist.

2. Füllstandmessgerät nach Anspruch 1,
wobei das Sendesignal im Störsignalerfassungsmodus abgeschaltet ist.

3. Füllstandmessgerät nach Anspruch 1 oder 2, weiter aufweisend:
ein variables Filter (109), das im Empfangszweig (104) angeordnet ist und auf den aktuell verwendeten Sende- und Empfangskanal abgestimmt ist.

4. Füllstandmessgerät nach einem der vorhergehenden Ansprüche, weiter aufweisend:
KK:CGS
ein variables Dämpfungsglied (110), das im Sendezweig (107) angeordnet ist und zum Einnehmen des Störsignalerfassungsmodus die Dämpfung des Sendesignals erhöht.

5. Füllstandmessgerät nach einem der vorhergehenden Ansprüche, weiter aufweisend:
einen Verstärker (304), der im Sendezweig (107) angeordnet ist und zum Einnehmen des Störsignalerfassungsmodus deaktiviert wird.

6. Füllstandmessgerät nach einem der vorhergehenden Ansprüche,
ausgeführt zum zyklischen Schalten zwischen dem Störsignalerfassungsmodus und dem Füllstandmessmodus.

7. Füllstandmessgerät nach einem der vorhergehenden Ansprüche, weiter aufweisend:
einen Schalter (401), der den Sendezweig zum Einnehmen des Störsignalerfassungsmodus unterbricht.

8. Füllstandmessgerät nach einem der vorhergehenden Ansprüche, weiter aufweisend:
einen Datenspeicher (108), auf dem eine Referenzechokurve gespeichert ist;
wobei das Füllstandmessgerät zum Vergleich des im Störsignalerfassungsmodus erfassten Empfangssignals mit der Referenzechokurve ausgeführt ist, um zu entscheiden, ob das Empfangssignal ein Störsignal aufweist.

9. Verfahren zum Vermeiden einer Störbeeinflussung eines Füllstandradars durch ein anderes Gerät, aufweisend die Schritte:
Erzeugen und Aussenden eines Sendesignals in Richtung einer Füllgutoberfläche;
Empfangen und Auswerten eines Empfangssignals;
wahlweises Einnehmen eines Störsignalerfassungsmodus, zum Detektieren, ob das Empfangssignal ein Störsignal von einer externen Störquelle aufweist, und eines Füllstandmessmodus, zum Messen des Füllstands;
Wechseln des Sende- und des Empfangskanals, wenn im Störsignalerfassungsmodus ein Störsignal detektiert wurde;
wobei das Sendesignal im Störsignalerfassungsmodus eine geringere Intensität aufweist als im Füllstandmessmodus.

10. Programmelement, das, wenn es auf dem Prozessor eines Füllstandmessgeräts ausgeführt wird, das Füllstandmessgerät anleitet, das Verfahren nach Anspruch 9 auszuführen.

11. Computerlesbares Medium, auf dem ein Programmelement nach Anspruch 10 gespeichert ist.

## Claims

1. Fill level measurement device comprising:
a transmission branch (107) for generating and emitting a transmission signal towards a filling material surface;
a receiving branch (104) for receiving and evaluating a received signal;
wherein the fill level measurement device is configured to selectively assume an interfering signal detection mode for detecting whether the received signal comprises an interfering signal, and a fill level measurement mode for measuring the fill level;
wherein the transmission signal has a lower intensity in the interfering signal detection mode than in the fill level measurement mode;
wherein the fill level measurement device is configured to change the transmission and receiving channel when the fill level measurement device has detected an interfering signal in the interfering signal detection mode.

2. Fill level measurement device according to claim 1,
wherein the transmission signal is deactivated in the interfering signal detection mode.

3. Fill level measurement device according to claim 1 or 2, further comprising:
a variable filter (109) which is arranged in the receiving branch (104) and is adapted to the transmission or receiving channel currently in use.

4. Fill level measurement device according to any of the preceding claims, further comprising:
a variable attenuator (110) that is arranged in the transmission branch (107) and increases the attenuation of the transmission signal in order for the interfering signal detection mode to be assumed.

5. Fill level measurement device according to any of the preceding claims, further comprising:
an amplifier (304) which is arranged in the transmission branch (107) and is deactivated in order for the interfering signal detection mode to be assumed.

6. Fill level measurement device according to any of the preceding claims,
which is configured to cyclically switch between the interfering signal detection mode and the fill level measurement mode.

7. Fill level measurement device according to any of the preceding claims, further comprising:
a switch (401) which disconnects the transmission branch in order for the interfering signal detection mode to be assumed.

8. Fill level measurement device according to any of the preceding claims, further comprising:
a data memory (108) in which a reference echo curve is stored;
wherein the fill level measurement device is configured to compare the received signal detected in the interfering signal detection mode with the reference echo curve, in order to decide whether the received signal is an interfering signal.

9. Method for preventing a fill level radar being affected by interference from another device, comprising the steps of:
generating and emitting a transmission signal towards a filling material surface;
receiving and evaluating a received signal;
selectively assuming an interference signal detection mode in order to detect whether the received signal comprises an interfering signal, and a fill level measurement mode for measuring the fill level;
changing the transmission and receiving channel when an interfering signal in the interfering signal detection mode has been detected;
wherein the transmission signal has a lower intensity in the interference signal detection mode than in the fill level measurement mode.

10. Program element which, when executed on the processor of a fill level measurement device, instructs the fill level measurement device to carry out the method according to claim 9.

11. Computer-readable medium, on which a program element according to claim 10 is stored.

## Revendications

1. Appareil de mesure de niveau de remplissage, comportant :
une branche d'émission (107) destinée à générer et émettre un signal d'émission en direction d'une surface d'un produit ;
une branche de réception (104) destinée à recevoir et évaluer un signal de réception ;
l'appareil de mesure de niveau de remplissage étant exécuté pour entrer sélectivement dans un mode de détection de signaux parasites, pour détecter si le signal de réception comporte un signal parasite provenant d'une source de perturbation externe, et dans un mode de mesure de niveau de remplissage pour mesurer le niveau de remplissage ;
le signal d'émission présentant une intensité plus faible dans le mode de détection de signaux parasites que dans le mode de mesure de niveau de remplissage ;
l'appareil de mesure de niveau de remplissage étant exécuté pour changer le canal d'émission et de réception lorsque l'appareil de mesure de niveau de remplissage a détecté un signal parasite dans le mode de détection de signaux parasites.

2. Appareil de mesure de niveau de remplissage selon la revendication 1,
dans lequel le signal d'émission est désactivé dans le mode de détection de signaux parasites.

3. Appareil de mesure de niveau de remplissage selon la revendication 1 ou 2, comportant en outre :
un filtre variable (109), qui est disposé dans la branche de réception (104) et qui est réglé sur le canal d'émission et de réception actuellement utilisé.

4. Appareil de mesure de niveau de remplissage selon l'une des revendications précédentes, comportant en outre :
un organe d'atténuation variable (110), qui est disposé dans la branche d'émission (107) et qui augmente l'atténuation du signal d'émission pour entrer dans le mode de détection de signaux parasites.

5. Appareil de mesure de niveau de remplissage selon l'une des revendications précédentes, comportant en outre :
un amplificateur (304), qui est disposé dans la branche d'émission (107) et qui est désactivé pour entrer dans le mode de détection de signaux parasites.

6. Appareil de mesure de niveau de remplissage selon l'une des revendications précédentes,
exécuté pour la commutation cyclique entre le mode de détection de signaux parasites et le mode de mesure de niveau de remplissage.

7. Appareil de mesure de niveau de remplissage selon l'une des revendications précédentes, comportant en outre :
un commutateur (401), qui déconnecte la branche d'émission pour entrer dans le mode de détection de signaux parasites.

8. Appareil de mesure de niveau de remplissage selon l'une des revendications précédentes, comportant en outre :
une mémoire de données (108), sur laquelle est enregistrée une courbe des échos de référence ;
l'appareil de mesure de niveau de remplissage étant exécuté pour comparer le signal de réception détecté dans le mode de détection de signaux parasites à la courbe des échos de référence pour décider si le signal de réception est un signal parasite.

9. Procédé destiné à empêcher un brouillage d'un radar de niveau de remplissage par un autre appareil, comportant les étapes consistant à :
générer et émettre un signal d'émission en direction d'une surface d'un produit ;
recevoir et évaluer un signal de réception ;
entrer sélectivement dans un mode de détection de signaux parasites, pour détecter si le signal de réception comporte un signal parasite provenant d'une source de perturbation externe, et dans un mode de mesure de niveau de remplissage pour mesurer le niveau de remplissage ;
changer le canal d'émission et de réception lorsqu'un signal parasite a été détecté dans le mode de détection de signaux parasites ;
le signal d'émission présentant une intensité plus faible dans le mode de détection de signaux parasites que dans le mode de mesure de niveau de remplissage.

10. Élément de programme qui, lorsqu'il est exécuté sur le processeur d'un appareil de mesure de niveau de remplissage, amène l'appareil de mesure de niveau de remplissage à exécuter le procédé selon la revendication 9.

11. Support lisible par ordinateur, sur lequel est enregistré un élément de programme selon la revendication 10.
